# EUROPÄISCHE PATENTANMELDUNG

(11) **EP 1 958 950 A1**
(43) Veröffentlichungstag der Anmeldung: **20.08.2008**
(21) Anmeldenummer: 08009495.6
(22) Anmeldetag: 07.12.2004
(51) Int. Cl.: C07F 9/30, C08K 5/5313

(54) **Verwendung von Dialkylphosphinsäuresalzen**

(30) Priorität: 19.12.2003 DE 10359815
(62) Teilanmeldung aus: 04028905.0
(71) Anmelder: Clariant Produkte (Deutschland) GmbH, D-65843 Sulzbach (DE)
(72) Erfinder: Bauer, Ralph, Dr., 50170 Kerpen (DE); Krause, Werner, Dr., 50354 Hürth (DE); Sicken, Martin, Dr., 51149 Köln (DE); Weferling, Norbert, Dr., 50678 Köln (DE)
(74) Vertreter: Paczkowski, Marcus

(57) **Zusammenfassung**

Verwendung von Dialkylphosphinsäuresalzen zur Herstellung von Flammschutzmitteln für thermoplastische Polymere wie Polyester, Polystyrol oder Polyamid und für Duroplaste, dadurch gekennzeichnet, dass die Dialkylphosphinsäuresalze hergestellt wurden, indem man
a) hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, Al, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei dem Lösungsmitteladditiven um Mineralsäuren, saure Salze, Carbonsäuren, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt.

## Beschreibung

Die Erfindung betrifft die Verwendung von Dialkylphosphinsäuresalzen die nach einem speziellen Verfahren hergestellt wurden.

Salze von organischen Phosphorsäuren sind als Flammschutzmittel bekannt. Sie können nach verschiedenen Verfahren hergestellt werden.

So beschreibt die EP-A-0 699 708 flammgeschützte Polyesterformmassen, wobei die Polyester durch den Zusatz von Calcium- oder Aluminiumsalzen von Phosphin- oder Diphosphinsäuren flammfest ausgerüstet werden. Die vorgenannten Salze werden durch Umsetzung des entsprechenden Dialkylphosphinsäuren mit Calcium- oder Aluminiumhydroxid erhalten.

Die DE 24 47 727 beschreibt schwerentflammbare Polyamidformmassen, die ein Salz einer Phosphinsäure oder einer Diphosphinsäure enthalten.

Die vorgenannten Verfahren weisen jedoch den Nachteil auf, dass die geeigneten organischen Phosphorverbindungen zunächst auf umständliche Art und Weise hergestellt werden müssen. Dies trifft insbesondere für die Dialkylphosphinsäuren zu, deren Aluminiumsalze in der Anwendung als Flammschutzmittel die besten Resultate liefern, und für die ebenfalls einige Synthesewege beschrieben sind.

So beschreibt die DE 21 00 779 A1 ein Verfahren zur Herstellung von Dialkylphosphinsäurealkylestern durch Addition von Olefinen mit 2 bis 22 Kohlenstoffatomen an die nur schwer zugänglichen Alkylphosphonigsäureester.
In der WO 99/28327 wird ein Verfahren beschrieben, das ausgehend von Alkalisalzen der hypophosphorigen Säuren in zwei Stufen zu Phosphinsäuresalzen führt.

Dieses Verfahren besitzt den Nachteil, dass organische Lösungsmittel, bevorzugt Essigsäure, Verwendung finden. Diese müssen aufwendig rezykliert werden und verbleiben als Verunreinigungen im Endprodukt, was bei der vorgesehenen Einarbeitung in Kunststoffe zu unerwünschten Nebeneffekten führt. Des Weiteren führt die Verwendung von organischen Lösungsmitteln in der ersten Verfahrensstufe aufgrund der hohen Löslichkeit der umzusetzenden Olefine zu unerwünschten telomeren Nebenprodukten.

Der Erfindung liegt daher die Aufgabe zugrunde, die Verwendung von Salzen der Dialkylphosphinsäuren zur Verfügung zu stellen, bei dem die Dialkylphosphinsäuresalze nach einem speziellen Verfahren auf besonders einfache und wirtschaftliche Weise hergestellt wurden.

Diese Aufgabe wird gelöst durch die Verwendung von Dialkylphosphinsäuresalzen zur Herstellung von Flammschutzmitteln für thermoplastische Polymere wie Polyester, Polystyrol oder Polyamid und für Duroplaste, dadurch gekennzeichnet, dass die Dialkylphosphinsäuresalze hergestellt wurden, indem man
a) hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, Al, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei dem Lösungsmitteladditiven um Mineralsäuren, saure Salze, Carbonsäuren, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt.

Die Dialkylphosphinsäuresalze können deswegen vorteilhaft verwendet werden, weil das Verfahren folgende Vorteile/Spezifikationen, aufweist:
Geeignete saure Salze: Natriumbisulfat, Natriumbisulfit und/oder Kaliumbisulfit.

Geeignete Carbonsäuren: Ameisensäure, Essigsäure, Propionsäure, Buttersäure und/oder längerkettige Carbonsäuren und/oder um deren Dimere, Oligomere und/oder Polymere.

Geeignetes Salz: Alkalisalz, insbesondere Natriumsalz.

Geeignete Radikalinitiatoren: Wasserstoffperoxid, Kaliumpersulfat, Natriumpersulfat, Ammoniumpersulfat und/oder Azoverbindungen wie 2,2'-Azobis(2-amidinopropan)-dihydrochlorid und/oder 2,2'-Azobis(N,N'-dimethylenisobutyramidin)-dihydrochlorid.

Bevorzugt wird der Radikalinitiator in Mengen von 0,001 bis 10 mol-%, bezogen auf die phosphorhaltige Verbindung, eingesetzt.

Geeignete Olefine: Ethylen, Propylen, n-Buten und/oder i-Buten oder Gemische davon.

Das geeignete Salz der hypophosphorigen Säure ist das Na-Salz.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Bevorzugt erfolgt die Umsetzung in Verfahrensstufe b) bei einer Temperatur von 20 bis 250 °C.

Bevorzugt erfolgt die Umsetzung in Verfahrensstufe b) von Dialkylphosphinsäuren und/oder deren Alkalisalzen mit Metallverbindungen von Mg, Ca, Al, Zn, Ti, Sn, Zr oder Fe zu den Dialkylphosphinsäuresalzen dieser Metalle bei einem Feststoffgehalt der Dialkylphosphinsäuresalze dieser Metalle von 0,1 bis 70 Gew.-%, bevorzugt 5 bis 40 Gew.-%.

Bevorzugt weist das verwendete Dialkylphosphinsäuresalz der Metalle Mg, Ca, Al, Zn, Ti, Sn, Zr oder Fe eine Restfeuchte von 0,01 bis 10 Gew.-% auf.

Bevorzugt weist das verwendete Dialkylphosphinsäuresalz der Metalle Mg, Ca, Al, Zn, Ti, Sn, Zr oder Fe eine mittlere Teilchengröße von 0,1 bis 2000 µm auf.

Bevorzugt weist das verwendete Dialkylphosphinsäuresalz der Metalle Mg, Ca, Al, Zn, Ti, Sn, Zr oder Fe eine Schüttdichte von 80 bis 800 g/l auf.

Die Erfindung betrifft auch eine flammgeschützte Polymerformmasse, enthaltend Dialkylphosphinsäuresalze der Metalle Mg, Ca, Al, Zn, Ti, Sn, Zr oder Fe, die hergestellt wurden, indem man
a) hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, AI, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei dem Lösungsmitteladditiven um Mineralsäuren, saure Salze, Carbonsäuren, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt.

Bevorzugt ist eine flammgeschützte Polymerformmasse, enthaltend 1 bis 50 Gew.-% Dialkylphosphinsäuresalze der Metalle Mg, Ca, AI, Zn, Ti, Sn, Zr oder Fe, die hergestellt wurden indem man
a) hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, Al, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei dem Lösungsmitteladditiven um Mineralsäuren, saure Salze, Carbonsäuren, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt, 1 bis 99 Gew.-% Polymer oder Mischungen derselben, 0 bis 60 Gew.-% Additive und 0 bis 60 Gew.-% Füllstoff.

Besonders bevorzugt ist eine flammgeschützte Polymerformmasse enthaltend 5 bis 30 Gew.-% Dialkylphosphinsäuresalze der Metalle Mg, Ca, AI, Zn, Ti, Sn, Zr oder Fe, die hergestellt wurden indem man
a) hypophosphorige Säure und/oder deren Salze mit "Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, Al, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei dem Lösungsmitteladditiven um Mineralsäuren, saure Salze, Carbonsäuren, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt, 5 bis 90 Gew.-% Polymer oder Mischungen derselben, 5 bis 40 Gew.-% Additive und 5 bis 40 Gew.-% Füllstoff.

Außerdem betrifft die Erfindung Polymer-Formkörper, -Filme, -Fäden und -Fasern, enthaltend Dialkylphosphinsäuresalze der Metalle Mg, Ca, Al, Zn, Ti, Sn, Zr oder Fe, die hergestellt wurden, indem man
a) hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, Al, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei dem Lösungsmitteladditiven um Mineralsäuren, saure Salze, Carbonsäuren, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt, 1 bis 99 Gew.-% Polymer oder Mischungen derselben, 0 bis 60 Gew.-% Additive und 0 bis 60 Gew.-% Füllstoff.

Besonders bevorzugt sind Polymer-Formkörper, -Filme, -Fäden und -Fasern enthaltend 5 bis 30 Gew.-% Dialkylphosphinsäuresalze der Metalle Mg, Ca, AI, Zn, Ti, Sn, Zr oder Fe, die hergestellt wurden, indem man
a) hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, AI, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei dem Lösungsmitteladditiven um Mineralsäuren, saure Salze, Carbonsäuren, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt, 5 bis 90 Gew.-% Polymer oder Mischungen derselben, 5 bis 40 Gew.-% Additive und 5 bis 40 Gew.-% Füllstoff.

Schließlich betrifft die Erfindung auch die Verwendung von Dialkylphosphinsäuresalze der Metalle Mg, Ca, Al, Zn, Ti, Sn, Zr oder Fe, dadurch gekennzeichnet, dass sie eine
- Restfeuchte von 0,01 bis 10 Gew.-%, bevorzugt von 0,05 bis 1 Gew.-%
- mittlere Teilchengröße von 0,1 bis 1000 µm, bevorzugt 10 bis 100 µm
- Schüttdichte von 80 bis 800 g/l, bevorzugt 200 bis 700 g/l.
aufweisen und die hergestellt wurden, indem man
a) hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, AI, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei dem Lösungsmitteladditiven um Mineralsäuren, saure Salze, Carbonsäuren, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt.

Überraschend wurde gefunden, dass im Lösungsmittelsystem Olefine mit überraschend guter Umsatzgeschwindigkeit umgesetzt werden können, und die Bildung telomerer Produkte, also solcher mit mehrfacher Olefinanlagerung, stark unterdrückt wird.

Geeignete Lösungssystem-Additive sind Mineralsäuren wie z. B. die Elementwasserstoffsäuren Säuren, Oxosäuren, Peroxosäuren und Peroxodisäuren der Elemente der siebten, sechsten, fünften, vierten und dritten Hauptgruppe des Periodensystems.

Geeignete Mineralsäuren sind Flusssäure, Salzsäure, Perchlorsäure, Schweflige Säure, Schwefelsäure, Peroxomonoschwefelsäure (Caro'sche Säure), Peroxodischwefelsäure, Salpetrige Säure, Salpetersäure, Phosphorige Säure, Phosphorsäure, Pyrophosphorsäure, Polyphosphorsäure, Peroxomonophosphorsäure, Peroxodiphosphorsäure, Kohlensäure, Kieselsäure, Borsäure, Peroxoborsäure.

Geeignete Lösungssystem-Additive sind Alkalien und Elektrolyte.

Bevorzugt wird die freie Hypophosphorige Säure in situ aus Alkalihypophosphit und Säure gebildet. Erfindungsgemäß beträgt das Verhältnis von Säure zu Hypophosphit (auf Säure-Äquivalentbasis) 0 zu 1 bis 2 zu 1.

Besonders bevorzugte Radikalinitiatoren sind Peroxoverbindungen wie Peroxomonoschwefelsäure, Kaliumpersulfat (Kaliumperoxomonosulfat), Caroat(TM), Oxone(TM), Peroxodischwefelsäure, Kaliumpersulfat (Kaliumperoxodisulfat), Natriumpersulfat (Natriumperoxodisulfat), Ammoniumpersulfat (Ammoniumperoxodisulfat).

Weiterhin bevorzugt sind Azoinitiatoren wie 2-t-Butylazo-2-cyanopropan, Dimethylazodiisobutyrat, Azodiisobutyronitril, 2-t-Butylazo-1-cyanocyclohexan, 1-t-Amylazo-1-cyanocyclohexan. Weiterhin sind bevorzugt Alkylperketale wie 2,2-Bis-(t-butylper-oxy)butan, Ethyl-3,3-bis(t-butylperoxy)butyrat, 1,1-Di-(t-butylperoxy)-cyclohexan.

Geeignet Azoinitiatoren wie VAZO^{®} 52, VAZO^{®} 64 (AIBN), VAZO^{®} 67, VAZO^{®} 88, VAZO^{®} 44, VAZO^{®} 56, VAZO^{®} 68 der Fa. Dupont-Biesteritz, V-70 2,2'-Azobis(4-methoxy-2,4-dimethyl valeronitril),V-65 2,2'-Azobis(2,4-dimethylvaleronitril)V-601 Dimethyl 2,2'-azobis(2-methylpropionat),V-59 2,2'-Azobis(2-methylbutyronitril),V-40, VF-096 1,1'-Azobis(cyclohexane-1-carbon itril),V-30 1-[(cyano-1-methylethyl)azo]formamid,VAm-110 2,2'-Azobis(N-butyl-2-methylpropionamid),VAm-111 2,2'-Azobis(N-cyclohexyl-2-methylpropionamid) VA-041 2,2'-Azobis[2-(5-methyl-2-imidazolin-2-yl)propan]dihydrochlorid, VA-044 2,2'-Azobis[2-(2-imidazolin-2-yl)propan] dihydrochlorid,VA-046B 2,2'-Azobis[2-(2-imidazolin-2-yl)propandisulfatedihydrate, V-50 2,2' - azobis(2-amidinopropan) hydrochlorid,VA-057 2,2'-Azobis[N-(2-carboxyethyl)-2-methylpropionamidin]-tetrahydrat,VA-058 2,2'-Azobis[2-(3,4,5,6-tetrahydropyrimidin-2-yl)propan] dihydrochlorid,VA-060 2,2'-Azobis{2-[1-(2-hydroxyethyl)-2-imidazolin-2-yl]propan}dihydrochlorid,VA-0612,2'-Azobis[2-(2-imidazolin-2-yl)propan],VA-080 2,2'-Azobis{2-methyl-N-[1,1-bis(hydroxymethyl)-2-hydroxyethyl] propionamid,VA-085 2,2'-Azobis{2-methyl-N-[2-(1-hydroxybuthyl)Jpropionamid},VA-086 2,2'-Azobis[2-methyl-N-(2-hydroxyethyl)propionamid]von Wako Chemicals.

Bei den Aluminiumverbindungen ist metallisches Aluminium und Aluminiumsalze mit Anionen der siebten Hauptgruppe wie z. B. Aluminiumfluorid, Aluminiumfluoridtrihydrat, Aluminiumchlorid, Aluminiumchlorid hexahydrat, Aluminiumhydroxychlorid, ALCHLOR^{®}-AC von Hardman Australien, Aluminiumchloridlösung, sulfatkonditionierte Polyaluminiumchloridlösung (PACS) von Lurgi Lifescience, OBRAFLOC 18^{®} von Oker Chemie GmbH, Aikaflock^{®}, Ekocid^{®} 60-Typen, Sachtoklar^{®}-Typen, Ekofloc^{®}-Typen, Ekozet-Typen von Sachtleben, Locron^{®}-, Parimal^{®}-Typen von Clariant, wasserfreies Aluminiumbromid, Aluminiumiodid, Aluminiumiodid hexahydrat bevorzugt.

Geeignet sind Aluminiumsalze mit Anionen der sechsten Hauptgruppe wie z. B. Aluminiumsulfid, Aluminiumselenid.

Geeignet sind Aluminiumsalze mit Anionen der fünften Hauptgruppe wie z. B. Aluminiumphosphid, Aluminiumhypophosphit, Aluminiumantimonid, Aluminiumnitrid sowie Aluminiumsalze mit Anionen der vierten Hauptgruppe wie z. B. Aluminiumcarbid, Aluminiumhexafluorosilicat; ebenso Aluminiumsalze mit Anionen der ersten Hauptgruppe wie z. B. Aluminiumhydrid, Aluminium-Calcium-Hydrid, Aluminiumborhydrid oder auch Aluminiumsalze der Oxosäuren der siebten Hauptgruppe wie z. B. Aluminiumchlorat.

Geeignet sind Aluminiumsalze der Oxosäuren der sechsten Hauptgruppe wie z. B. Aluminiumsulfat, Aluminiumsulfat hydrat, Aluminiumsulfat hexahydrat, Aluminiumsulfat hexadekahydrat, Aluminiumsulfat octadekahydrat, Aluminiumsulfat-Lösung von Ekachemicals, Aluminiumsulfat-flüssig von Oker Chemie GmbH, Natrium-Aluminiumsulfat, Natrium-Aluminiumsulfatdodekahydrat, Aluminium-Kaliumsulfat, Aluminium-Kaliumsulfatdodecahydrat, Aluminiumammoniumsulfat, Aluminiumammoniumsulfatdodecahydrat, Magaldrat (Al₅Mg₁₀(OH)₃₁(SO₄)₂ x nH₂O).

Geeignet sind auch Aluminiumsalze der Oxosäuren der fünften Hauptgruppe wie z. B. Aluminiumnitratnonahydrat, Aluminiummetaphosphat, Aluminiumphosphat, leichtes Aluminiumphosphathydrat, monobasisches Aluminiumphosphat, monobasische Aluminiumphosphat-Lösung; ebenso Aluminiumsalze der Oxosäuren der vierten Hauptgruppe wie z. B. Aluminiumsilicat, Aluminium-Magnesiumsilicat, Aluminiummagnesiumsilicathydrat (Almasilat), Aluminiumcarbonat, Hydrotalcit (Mg₆Al₂(OH)₁₆CO₃ * nH₂O), Dihydroxyaluminiumnatriumcarbonat, NaAl(OH)₂CO₃ und Aluminiumsalze der Oxosäuren der dritten Hauptgruppe wie z. B. Aluminiumborat oder auch Aluminiumsalze der Pseudohalogenide wie z. B. Aluminiumthiocyanat.

Geeignet sind Aluminiumoxid, Aluminiumoxidhydrat, Aluminiumhydroxid oder gemischtes Aluminiumoxidhydroxid und/oder Polyaluminiumhydroxy-Verbindungen, die vorzugsweise einen Aluminiumgehalt von 9 bis 40 Gew.-% besitzen.

Geeignete Aluminiumsalze sind solche mit organischen Anionen z. B. Aluminiumsalze von Mono-, Di-, Oligo-, Polycarbonsäuren wie z. B. Aluminiumdiacetat, Aluminiumacetat, Aluminiumsubacetat, Aluminiumacetotartrat, Aluminiumformiat, Aluminiumlactat, Aluminiumoxalat, Aluminiumtartrat, Aluminiumoleat, Aluminiumpalmitat, Aluminiummonosterarat, Aluminiumstearat, Aluminium trifluoromethansulfonat, Aluminiumbenzoat, Aluminiumsalicylat, Aluminiumhexaharnstoffsulfattriiodid, Aluminium-8-oxychinolat.

Bei den Zink-Verbindungen ist elementares, metallisches Zink sowie Zinksalze mit anorganischen Anionen wie z.B. Zinkhalogenide (Zinkfluorid, Zinkfluorid tetrahydrat, Zinkchloride (Zinkbutter), Bromide Zinkiodid) geeignet.

Geeignet sind Zinksalze der Oxosäuren der dritten Hauptgruppe (Zinkborat, z. B. Firebrake ZB, Firebrake 415, Firebrake 500) sowie Zinksalze der Oxosäuren der vierten Hauptgruppe (basisches) Zinkcarbonat, Zinkhydroxidcarbonat, wasserfreies Zinkcarbonat, basisches Zinkcarbonathydrat, (basisches) Zinksilicat, Zinkhexafluorosilicat, Zinkhexafluorosilicat hexahydrat, Zinkstannat, Zinkhydroxidstannat, Zink-Magnesium-Aluminium-Hydroxid-Carbonat) und Zinksalze der Oxosäuren der fünften Hauptgruppe (Zinknitrat, Zinknitrathexahydrat, Zinknitrit, Zinkphosphat, Zinkpyrophosphat); ebenso Zinksalze der Oxosäuren der sechsten Hauptgruppe (Zinksulfat, Zinksulfatmonohydrat, Zinksulfatheptahydrat) und Zinksalze der Oxosäuren der siebten Hauptgruppe (Hypohalogenite, Halogenite, Halogenate, z. B. Zinkiodat, Perhalogenate, z. B. Zinkperchlorat).

Geeignet sind Zinksalze der Pseudohalogenide (Zinkthiocyanat, Zinkcyanat, Zinkcyanid)

Geeignet sind Zinkoxide, Zinkperoxide, Zinkhydroxide oder gemischte Zinkoxidhydroxide (Standard-Zinkoxid, z. B. von Grillo, aktiviertes Zinkoxid z. B. von Rheinchemie, Zincit, Calamin).

Geeignet sind Zinksalze der Oxosäuren der Übergangsmetalle (Zinkchromat(VI)hydroxyd (Zinkgelb), Zinkchromit, Zinkmolybdat, z.B. Kemgard^{™} 911 B, Zinkpermanganat, Zinkmolybdat-Magnesiumsilicat, z. B. Kemgard^{™} 911 C)

Geeignete Zinksalze sind solche mit organischen Anionen, hierzu gehören Zinksalze von Mono-, Di-, Oligo-, Polycarbonsäuren, Salze der Ameisensäure (Zinkformiate), der Essigsäure (Zinkacetate, Zinkacetat dihydrat, Galzin), der Trifluoressigsäure (Zinktrifluoracetat hydrat), Zinkpropionat, Zinkbutyrat, Zinkvalerat, Zinkcaprylat, Zinkoleat, Zinkstearat, der Oxalsäure (Zinkoxalat), der Weinsäure (Zinktartrat), Citronensäure (tribasisches Zinkcitrat dihydrat), Benzoesäure (Benzoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionaen (Zinkphenolat etc), Zink-para-Phenolsulfonat, Zink-para-Phenolsulfonathydrat, Zinkacetylacetonat hydrat, Zinktannat, Zinkdimethyldithiocarbamat, Zinktrifluormethansulfonat.

Geeignet sind Zinkphosphid, Zinkselenid, Zinktellurid.

Bei den Titan-Verbindungen ist metallisches Titan ebenso wie Titansalze mit anorganischen Anionen wie z. B. Chlorid-, Nitrat- oder Sulfat-Ionen sowie organischen Anionen wie z. B. Formiat- oder Acetat-Ionen. Geeignet sind Titandichlorid, Titansesquisulfat, Titan(IV)bromid, Titan(IV)fluorid, Titan(III)chlorid, Titan(IV)chlorid, Titan(IV)chlorid-Tetrahydrofuran-Komplex, Titan(IV)oxychlorid, Titan(IV)oxychlorid-Salzsäure-Lösung, Titan(IV)oxysulfat, Titan(IV)oxysulfat-Schwefel-säure-Lösung oder auch Titanoxide. Bevorzugte Titan-Alkoxide sind Titan-(IV)-n-propoxid (Tilcom^{®} NPT, Vertec^{®} NPT), Titan-(IV)-n-butoxid, Titanchloridtrüsopropoxid, Titan-(IV)-ethoxid, Titan-(IV)-2-ethylhexyloxid (Tilcom^{®} EHT, Vertetec^{®} EHT)

Bei den Zinn-Verbindungen ist metallisches Zinn sowie Zinnsalze (Zinn(11)chlorid, Zinn(II)chlorid dihydrat, Zinn(IV)chlorid) geeignet, ebenso Zinnoxide sowie als bevorzugtes Zinn-Alkoxid Zinn-(IV)-tert-butoxid.

Bei den Zirkonium-Verbindungen ist metallisches Zirkonium sowie Zirkoniumsalze wie Zirkonium(IV)chlorid, Zirkoniumsulfat, Zirkoniumsulfattetrahydrat, Zirconylacetat, Zirconylchlorid, Zirconylchloridoctahydrat geeignet. Weiterhin geeignet sind Zirkonoxide sowie als bevorzugtes Zirkonium-Alkoxid Zirkon-(IV)-tert-butoxid.

Gut geeignet ist ein Verfahren, bei dem man Natriumhypophosphit mit Ethylen in Gegenwart von Natriumperoxodisulfat in Wasser zum Natriumsalz der Diethylphosphinsäure als Hauptprodukt umsetzt, dieses Produkt anschließend mit Schwefelsäure in die Diethylphosphinsäure überführt und mit Aluminiumhydroxid zum Aluminiumsalz der Diethylphosphinsäure umsetzt.

Auch kann man ein in Verfahrenstufe a) erhaltenes Dialkylphosphinsäuresalz in die Dialkylphosphinsäure umwandeln und diese mit Metallverbindungen von Mg, Ca, Al, Zn, Ti, Sn, Zr oder Fe zu den Dialkylphosphinsäuresalzen dieser Metalle umsetzen.

Auch kann man eine in Verfahrenstufe a) erhaltenes Dialkylphosphinsäure in ein Dialkylphosphinsäuresalz umwandeln und dieses mit Metallverbindungen von Mg, Ca, Al, Zn, Ti, Sn, Zr oder Fe zu den Dialkylphosphinsäuresalzen dieser Metalle umsetzen.

Die für die erfindungsgemäße Verwandlung geeigneten Dialkylphosphinsäuresalze haben eine Restfeuchte von 0,01 bis 10 Gew.-%, bevorzugt von 0,1 bis 1 Gew.-%.

Die für die erfindungsgemäße Verwandlung geeigneten Dialkylphosphinsäuresalze zeigen eine Teilchengröße 0,1 bis 1000 µm, besonders bevorzugt 10 bis 100 µm.

Die für die erfindungsgemäße Verwandlung geeigneten Dialkylphosphinsäuresalze haben eine Schüttdichte von 80 bis 800 g/l, bevorzugt von 200 bis 700 g/l.

Insbesondere betrifft die Erfindung die Verwendung der erfindungsgemäß hergestellten Dialkylphosphinsäuresalze von Mg, Ca, Al, Zn, Ti, Sn, Zr oder Fe zur Herstellung von Flammschutzmitteln für thermoplastische Polymere wie Polyester, Polystyrol oder Polyamid und für duroplastische Polymere. Geeignete Polyester leiten sich von Dicarbonsäuren und Dialkoholen und/oder von Hydroxycarbonsäuren oder den entsprechenden Lactonen ab, wie Polyethylenterephthalat, Polybutylenterephthalat (Celanex 2500, Celanex 2002, Fa. Celanese; Ultradur, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Blockcopolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeigneten Polystyrolen um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Geeignete Polyamide und Copolyamide leiten sich von Diaminen und Dicarbonsäuren und/oder von Aminocarbonsäuren oder den entsprechenden Lactamen ab, wie Polyamid 4, Polyamid 6 (Akulon^{®} K122, DSM; Zytel^{®} 7301, Fa. DuPont; Durethan^{®} B 29, Fa. Bayer), Polyamid 6/6 (Zytel^{®} 101, Fa. DuPont; Durethan^{®} A30, Durethan^{®} AKV, Durethan^{®} AM, Fa. Bayer; Ultramid^{®} A3, Fa BASF) 6/10, 6/9, 6/12, 4/6, 12/12, Polyamid 11, Polyamid 12 (Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die erfindungsgemäßen Dialkylphosphinsäuresalze werden bevorzugt in Compounds angewendet, die weiter zur Erzeugung von Polymer-Formkörpern verwendet werden. Bevorzugtes Verfahren zur Herstellung von Polymer-Formkörpern ist das Spritzgießen.

Die Erfindung wird durch die nachstehenden Beispiele näher erläutert.

### Beispiel 1: Diethylphosphinsäure-Aluminiumsalz

1500 g (14 Mol) Natriumhypophosphit-Monohydrat und 35 g konzentrierte Schwefelsäure wurden in 7,5 kg Wasser gelöst und in einem 16-L-Doppelmantel

Druckreaktor aus Stahl-Emaille vorgelegt. Nach Aufheizen der Reaktionsmischung auf 100 °C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110 °C eine Lösung von 80 g (5 Mol-%) Wasserstoffperoxid (33 Gew.-%) in 300 g Wasser gleichmäßig zudosiert. Nach einer Nachreaktionszeit von 1 h, Entspannung des Reaktors und Abkühlung auf ca. 90 °C wurde innerhalb von 60 min 746 g (4,67 Mol Aluminium) Aluminiumacetat in 2254 g Wasser zugefügt. Anschließend wurde der erhaltene Feststoff abfiltriert, mit 2 I heißem Wasser gewaschen und bei 130 °C im Vakuum getrocknet. Ausbeute: 1721 g (93,5 % der Theorie).

| | | |
|---|---|---|
| ³¹P-NMR: | Diethylphosphinsäure-Al-Salz: | 97 Mol-% |
| | Butylethylphosphinsäure-Al-Salz: | 2,5 Mol-% |
| | Ethylphosphonsäure-Al-Salz: | 0,5 Mol-% |

### Beispiel 2: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100 °C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110 °C eine Lösung von 17 g (0,5 Mol-%) Natriumperoxodisulfat in 300 g Wasser gleichmäßig zudosiert. Nach einer Nachreaktionszeit von 1 h, Entspannung des Reaktors und Abkühlung auf ca. 90 °C wurde innerhalb von 60 min 3000 g (4,67 Mol Aluminium) einer 46 %igen wässrigen Lösung von Al₂(SO₄)₃·14 H₂O zugefügt. Anschließend wurde der erhaltene Feststoff abfiltriert, mit 2 I heißem Wasser gewaschen und bei 130 °C im Vakuum getrocknet. Ausbeute: 1730 g (95 % der Theorie).

| | | |
|---|---|---|
| ³¹P-NMR: | Diethylphosphinsäure-AI-Salz: | 98,6 Mol-% |
| | Butylethylphosphinsäure-AI-Salz: | 0,9 Mol-% |
| | Ethylphosphonsäure-AI-Salz: | 0,5 Mol-% |

### Beispiel 3: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100 °C wurde über ein auf 20 bar eingestelltes Reduzierventil Ethylen bis zur Sättigung in den Reaktor eingeleitet. Über einen Zeitraum von 6 h wurde unter ständigem Rühren bei einem Ethylendruck von 20 bar und einer Temperatur von 100-110 °C eine Lösung von 32 g (1 Mol-%) Ammoniumperoxodisulfat in 300 g Wasser gleichmäßig zudosiert. Nach einer Nachreaktionszeit von 1 h, Entspannung des Reaktors und Abkühlung auf ca. 90 °C wurde innerhalb von 60 min 3000 g (4,67 Mol Aluminium) einer 46 %-igen wässrigen Lösung von Al₂(SO₄)₃·14 H₂O zugefügt. Anschließend wurde der erhaltene Feststoff abfiltriert, mit 2 I heißem Wasser gewaschen und bei 130 °C im Vakuum getrocknet. Ausbeute: 1750 g (95,1 % der Theorie).

| | | |
|---|---|---|
| ³¹P-NMR: | Diethylphosphinsäure-Al-Salz: | 93,9 Mol-% |
| | Butylethylphosphinsäure-Al-Salz: | 5,5 Mol-% |
| | Ethylphosphonsäure-Al-Salz: | 0,6 Mol-% |

### Beispiel 4: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100 °C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110 °C eine Lösung von 19 g (0,5 Mol-%) 2,2'-Azobis(2-amidinopropan)hydrochlorid (Wako Pure Chemical Industries, Ltd., Typ V50 98,8 %),in 300 g Wasser gleichmäßig zudosiert. Nach einer Nachreaktionszeit von 1 h, Entspannung des Reaktors und Abkühlung auf ca. 90 °C wurde innerhalb von 60 min 650 g (4,67 Mol Aluminium) Aluminiumchlorid hexahydrat in 2350 g Wasser zugefügt. Anschließend wurde der erhaltene Feststoff abfiltriert, mit 2 I heißem Wasser gewaschen und bei 130°C im Vakuum getrocknet. Ausbeute: 1740 g (94,5 % der Theorie).

| | | |
|---|---|---|
| ³¹P-NMR: | Diethylphosphinsäure-Al-Salz: | 97,7 Mol-% |
| | Butylethylphosphinsäure-Al-Salz: | 1,6 Mol-% |
| | Ethylphosphonsäure-Al-Salz: | 0,7 Mol-% |

### Beispiel 5: Diethylphosphinsäure-Aluminiumsalz

1500 g (14 Mol) Natriumhypophosphit-Monohydrat und 14 g konzentrierte Schwefelsäure wurden in 7,5 kg Wasser gelöst und in einem 16-L-Doppelmantel Druckreaktor aus Stahl-Emaille vorgelegt. Nach Aufheizen der Reaktionsmischung auf 100 °C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110 °C eine Lösung von 22 g (1 Mol-%) Natriumpercarbonat in 300 g Wasser gleichmäßig zudosiert. Nach einer Nachreaktionszeit von 1 h, Entspannung des Reaktors und Abkühlung auf ca. 90 °C wurde innerhalb von 60 min 3000 g (4,67 Mol Aluminium) einer 46 %igen wässrigen Lösung von Al₂(SO₄)₃·14 H₂O zugefügt. Anschließend wurde der erhaltene Feststoff abfiltriert, mit 2 I heißem Wasser gewaschen und bei 130 °C im Vakuum getrocknet.
Ausbeute: 1706 g (92,7 % der Theorie).

| | | |
|---|---|---|
| ³¹P-NMR: | Diethylphosphinsäure-AI-Salz: | 98,7 Mol-% |
| | Butylethylphosphinsäure-AI-Salz: | 0,8 Mol-% |
| | Ethylphosphonsäure-AI-Salz: | 0,5 Mol-% |

### Beispiel 6: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100 °C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110 °C eine Lösung von 22 g (1 Mol-%) Natriumpercarbonat und 16 g Tetraacetylethylendiamin in 300 g Wasser gleichmäßig zudosiert. Nach einer Nachreaktionszeit von 1 h, Entspannung des Reaktors und Abkühlung auf ca. 90 °C wurde innerhalb von 60 min 3000 g (4,67 Mol Aluminium) einer 46 %igen wässrigen Lösung von Al₂(SO₄)₃·14 H₂O zugefügt. Anschließend wurde der erhaltene Feststoff abfiltriert, mit 2 I heißem Wasser gewaschen und bei 130 °C im Vakuum getrocknet. Ausbeute: 1720 g (93,4 % der Theorie).

| | | |
|---|---|---|
| ³¹P-NMR: | Diethylphosphinsäure-AI-Salz: | 97,6 Mol-% |
| | Butylethylphosphinsäure-AI-Salz: | 1,8 Mol-% |
| | Ethylphosphonsäure-AI-Salz: | 0,6 Mol-% |

### Beispiel 7: Diethylphosphinsäure-Aluminiumsalz

1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100 °C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110 °C eine Lösung von 49 g (1 Mol-%) Dibenzoylperoxid (70 Gew.-% in Wasser) in 300 g Wasser gleichmäßig zudosiert. Nach einer Nachreaktionszeit von 1 h, Entspannung des Reaktors und Abkühlung auf ca. 90 °C wurde innerhalb von 60 min 1725 g (4,67 Mol Aluminium) Aluminiumnitratnonahydrat gelöst in 1275 g Wasser zugefügt. Anschließend wurde der erhaltene Feststoff abfiltriert, mit 2 I heißem Wasser gewaschen und bei 130 °C im Vakuum getrocknet. Ausbeute: 1697 g (92,2 % der Theorie).

| | | |
|---|---|---|
| ³¹P-NMR: | Diethylphosphinsäure-AI-Salz: | 96,5 Mol-% |
| | Butylethylphosphinsäure-AI-Salz: | 2,7 Mol-% |
| | Ethylphosphonsäure-AI-Salz: | 0,8 Mol-% |

### Beispiel 8 : Diethylphosphinsäure-Aluminiumsalz

1,5 kg (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100 °C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110 °C eine Lösung von 33 g (1 Mol-%) Natriumperoxodisulfat in 300 g Wasser gleichmäßig zudosiert. Nach einer Nachreaktionszeit von 1 h, Entspannung des Reaktors und Abkühlung auf ca. 90 °C wurden innerhalb von 30 min 700 g konzentrierte Schwefelsäure zudosiert. Anschließend wurden 364 g (4,67 Mol) Aluminiumhydroxid zugefügt und im geschlossenen Reaktor 8 h auf 150 °C erhitzt. Nach Abkühlung auf Umgebungstemperatur wurde der erhaltene Feststoff abfiltriert, mit 2 I heißem Wasser gewaschen und bei 130 °C im Vakuum getrocknet. Ausbeute: 1675 g (92 % der Theorie).

| | | |
|---|---|---|
| ³¹P-NMR: | Diethylphosphinsäure-Al-Salz: | 98,7 Mol-% |
| | Butylethylphosphinsäure-Al-Salz: | 0,8 Mol-% |
| | Ethylphosphonsäure-Al-Salz: | 0,5 Mol-% |

### Beispiel 9 : (Vergleich) Diethylphosphinsäure-Aluminiumsalz

2,2 kg (20,7 Mol) Natriumhypophosphit-1-hydrat wurden in 8 kg (7,62 I) Essigsäure gelöst und in einem 16-I-Doppelmantel-Druckreaktor aus Stahl-Emaille vorgelegt. Nach Aufheizen der Reaktionsmischung auf 85 °C wurde über ein auf 5 bar eingestelltes Reduzierventil Ethylen bis zur Sättigung in den Reaktor eingeleitet. Die Reaktion wurde unter ständigem Rühren durch Zudosieren einer Lösung von 56 g (1 Mol-%) 2,2'-Azobis(2-amidinopropan)dihydrochlorid in 250 ml Wasser gestartet und über die Radikalstarter-Dosier-Geschwindigkeit so gesteuert, dass die Reaktionstemperatur im Reaktor bei einer Manteltemperatur von 80 °C unter ständiger Zufuhr von Ethylen bei einem mittleren Druck von etwa 5 bar nicht über 95 °C stieg. Die Dosierzeit betrug insgesamt 3 Stunden. Danach ließ man noch 3 h bei 85°C nachreagieren. Der Reaktor wurde entspannt und auf Raumtemperatur abgekühlt. Die Gesamt-Auswaage betrug 11,7 kg. Dies entspricht einer Ethylen-Aufnahme von 1,2 kg (100 % der Theorie).

800 g der erhaltenen Mischung aus hauptsächlich Diethylphosphinsäure-Na-Salz wurden in 2500 ml Essigsäure gelöst und anschließend 38 g (0,48 Mol) Aluminium-hydroxid zugegeben. Dann wurde für etwa 4 Stunden unter Rückfluss erhitzt, abgekühlt und abfiltriert. Der erhaltene Feststoff wurde zuerst mit 1 Liter Eisessig, dann mit 1 Liter dest. Wasser und zuletzt mit 500 ml Aceton gewaschen, und dann bei 130 °C im Vakuum getrocknet. Ausbeute: 183 g (92 % der Theorie).

| | | |
|---|---|---|
| NMR-Analyse: | Diethylphosphinsäure-AI-Salz: | 87,2 Mol-% |
| | Ethylbutylphosphinsäure-AI-Salz | 11,9 Mol-% |
| | Ethylphosphonsäure-AI-Salz: | 0,9 Mol-% |

### Beispiel 10 (Vergleich): Diethylphosphinsäure-Aluminiumsalz

Ein Gemisch von 2,64 kg (20 Mol) einer 50 %igen wässrigen Lösung von hypophosphorigen Säure und 7 kg Essigsäure wurde in einem 16-L-Doppelmantel Druckreaktor aus Stahl-Emaille vorgelegt. Nach Aufheizen der Reaktionsmischung auf 100 °C wurde über ein auf 5 bar eingestelltes Reduzierventil Ethylen bis zur Sättigung in den Reaktor eingeleitet. Über einen Zeitraum von 6 h wurde unter ständigem Rühren bei einem Ethylendruck von 5 bar und einer Temperatur von 100-105 °C eine Lösung von 56 g 2,2'-Azobis(N,N'-dimethylenisobutyramidin)-dihydrochlorid in 500 g Essigsäure gleichmäßig zudosiert. Nach einer Nachreaktionszeit von 1 h, Entspannung des Reaktors und Abkühlung auf Raumtemperatur wurde die erhaltene Lösung wurde am Rotationsverdampfer weitestgehend vom Lösungsmittel Essigsäure befreit und anschließend mit 10 I Wasser versetzt. Innerhalb von einer Stunde wurden 4500 g (3,5 Mol) einer 46 %igen wässrigen Lösung von Al₂(SO₄)₃·14 H₂O zugefügt. Anschließend wurde der erhaltene Feststoff abfiltriert, nacheinander 2 mal mit je 2 I Wasser gewaschen und bei 130 °C im Vakuum getrocknet.
Ausbeute: 2520 g (82 % der Theorie).

| | | |
|---|---|---|
| NMR: | Diethylphosphinsäure:-Al-Salz | 90,8 Mol-% |
| | Butylethylphosphinsäure-Al-Salz: | 8,4 Mol-% |
| | Ethylphosphonsäure-Al-Salz: | 0,8 Mol-% |

### Beispiel 11 :

Die nach den Beispielen 1 und 2 und den Vergleichsbeispielen 3 und 4 hergestellten Produkte wurden im Masseverhältnis 1:4 mit Polybutylenterephthalat (PBT-GV; Typ Celanex^{®} 2300 GV1/30; Fa. Celanese, USA) vermischt und auf einem Doppelschneckenextruder (Typ Leistritz LSM 30/34) bei Temperaturen von 230-260 °C eingearbeitet. Der homogenisierte Polymerstrang wurde abgezogen, im Wasserbad gekühlt und anschließend granuliert.
Zur Beurteilung des eingetretenen Polymerabbaus wurde die Lösungsviskosität (SV-Zahl) der erhaltenen Polyester-Granulate im Vergleich zum reinen Polyester ermittelt. Folgende Ergebnisse wurden erhalten:

| enthaltener Zusatz | Reinheit* [%] | Viskositätszahl |
|---|---|---|
| Produkt nach Beispiel 2 | 98,6 | 1023 |
| Produkt nach Beispiel 8 | 98,7 | 1034 |
| Produkt nach Beispiel 9 (Vergleich) | 87,2 | 719 |
| Produkt nach Beispiel 10 (Vergleich) | 90,8 | 758 |
| kein Zusatz | - | 1072 |

| | | |
|---|---|---|
| *bezogen auf die Hauptkomponente | | |

Die Tabelle verdeutlicht die Vorteile der erfindungsgemäß hergestellten Produkte. Die einheitlichen und acetatfreien erfindungsgemäßen Phosphinsäuresalze ergeben nach Einarbeitung in die Polymermatrix nur leicht reduzierte Lösungsviskositäten, was auf eine nahezu unveränderte Molekülmasse schließen lässt. Dahingegen zeigt sich bei den gemäß der PCT/EP 98/07350 hergestellten Produkten ein deutlicher Polymerabbau (stark erniedrigte Viskositätszahlen).

## Patentansprüche

1. Verwendung von Dialkylphosphinsäuresalzen zur Herstellung von Flammschutzmitteln für thermoplastische Polymere wie Polyester, Polystyrol oder Polyamid und für Duroplaste, **dadurch gekennzeichnet, dass** die Dialkylphosphinsäuresalze hergestellt wurden, indem man
a) hypophosphorige Säure und/oder deren Salze mit Olefinen in Gegenwart eines Radikalstarters zu Dialkylphosphinsäuren und/oder deren Alkalisalzen in einem Lösungsmittelsystem umsetzt und
b) die nach a) erhaltenen Dialkylphosphinsäuren und/oder -Alkalisalze mit Metallverbindungen von Mg, Ca, Al, Zn, Ti, Sn, Zr und/oder Fe zu den Dialkylphosphinsäuresalzen dieser Metalle umsetzt, wobei das Lösungsmittelsystem 95 bis 100 Gew.-% Wasser und 0 bis 5 Gew.-% Lösungsmittelsystem-Additive enthält und wobei es sich bei dem Lösungsmitteladditiven um Mineralsäuren, saure Salze, Carbonsäuren, Alkalien und/oder Elektrolyte handelt und es sich bei den Mineralsäuren um Elementwasserstoffsäuren, Oxosäuren, Peroxosäuren und/oder Peroxodisäuren der Elemente der siebten, sechsten, fünften, vierten und dritten Hauptgruppe handelt.

2. Flammgeschützte Polymerformmasse, enthaltend 1 bis 50 Gew.-% Dialkylphosphinsäuresalze, die wie in Anspruch 1 hergestellt wurden, 1 bis 99 Gew.-% Polymer oder Mischungen derselben, 0 bis 60 Gew.-% Additive und 0 bis 60 Gew.-% Füllstoff.

3. Flammgeschützte Polymerformmasse enthaltend 5 bis 30 Gew.-% Dialkylphosphinsäuresalze, die wie in Anspruch 1 hergestellt wurden, 5 bis 90 Gew.-% Polymer oder Mischungen derselben, 5 bis 40 Gew.-% Additive und 5 bis 40 Gew.-% Füllstoff.

4. Polymer-Formkörper, -Filme, -Fäden und -Fasern, enthaltend 1 bis 50 Gew.-% Dialkylphosphinsäuresalze, die wie in Anspruch 1 hergestellt wurden, 1 bis 99 Gew.-% Polymer oder Mischungen derselben, 0 bis 60 Gew.-% Additive und 0 bis 60 Gew.-% Füllstoff.

5. Polymer-Formkörper, -Filme, -Fäden und -Fasern enthaltend 5 bis 30 Gew.-% Dialkylphosphinsäuresalze, die wie in Anspruch 1 hergestellt wurden, 5 bis 90 Gew.-% Polymer oder Mischungen derselben, 5 bis 40 Gew.-% Additive und 5 bis 40 Gew.-% Füllstoff.
